# EUROPÄISCHE PATENTANMELDUNG

(11) **EP 1 389 419 A2**
(43) Veröffentlichungstag der Anmeldung: **18.02.2004**
(21) Anmeldenummer: 03016006.3
(22) Anmeldetag: 15.07.2003
(51) Int. Cl.: A01G 13/02

(54) **Arbeitsgerät für den Pflanzenbau**

(30) Priorität: 18.07.2002 DE 10232782
(71) Anmelder: Gehweiler & Lehn, Maschinenbau GmbH, 88422 Betzenweiler (DE)
(72) Erfinder: Gehweiler, Georg, 88422 Betzenweiler (DE)
(74) Vertreter: Patentanwälte Eisele, Otten & Roth

(57) **Zusammenfassung**

Es wird ein Arbeitsgerät für den Pflanzenbau vorgeschlagen, mit dem der Aufwand zur Montage bzw. Demontage von Wetterschutzsystemen (4, 7) für Pflanzenreihen (8) deutlich reduziert wird. Dies wird erfindungsgemäß dadurch erreicht, dass eine wenigstens teilweise vertikal verstellbare Montiervorrichtung (1) zum Montieren und/oder Demontieren einer Wetterschutzhaut (4) an bzw. von einer entlang einer Pflanzenreihe (8) angeordneten Tragevorrichtung (7) sowie eine Einrichtung (2) zum Abrollen und/oder Aufrollen der Wetterschutzhaut (4) von einem bzw. auf einen Rollenhalter (2, 3) vorgesehen ist.

## Beschreibung

Die Erfindung betrifft ein Arbeitsgerät für den Pflanzenbau nach dem Oberbegriff des Anspruchs 1.

### Stand der Technik

Beispielsweise können nässeempfindliche Sonderkulturen wie Kirschen, Aprikosen, Himbeeren, usw. durch Regen, der vor allem in den letzten Tagen vor der Ernte fällt, erheblich geschädigt werden. Hierbei nehmen z.B. Kirschen durch einen entsprechenden Regen so viel Wasser auf, dass sie platzen und somit nicht mehr als Tafelobst verkauft werden können. Dementsprechend sind in diesen Fällen erhebliche wirtschaftliche Verluste für die Landwirte die Folge.

Zur Vermeidung entsprechender wirtschaftlicher Einbußen durch die Zerstörung der Ernte aufgrund von Regen sind bereits vielfältige Wetterschutzvorrichtungen im Einsatz. Beispielsweise weisen herkömmliche Wetterschutzvorrichtungen Pfähle auf, an denen Spanndrähte derart gespannt sind, dass an diese Trageeinheit z.B. sogenannte Hagelschutznetze und/oder Folien, Planen oder dergleichen fixiert werden können. Insbesondere zum Schutz von Kirschbaumreihen werden die Hagelnetze bzw. Folien in Form von aneinandergereihten Satteldachkonstruktionen über den Pflanzenreihen angeordnet.

Im Allgemeinen ist hierbei das Hagelnetz über vergleichsweise lange Zeiträume zum Schutz der Pflanzen vor Hagelschlag oberhalb der Pflanzen angebracht. Dagegen ist die Folie bzw. Plane lediglich wenige Tage vor der Ernte der Früchte oder dergleichen über den Pflanzen aufgespannt. Während der Zeit, in der die Pflanzen nicht vor Regen zu schützen sind, können die Folien bzw. Planen gegebenenfalls zusammengefaltet bzw. zusammengerollt und im Firstbereich der Schutzvorrichtung befestigt werden.

Ein vergleichbares Regenschutzsystem ist beispielsweise aus dem Gebrauchsmuster DE 201 21 233 U1 bekannt. Hierbei wird insbesondere eine aus einzelnen Lamellen bestehende Wetterschutzhaut, die auf einem Hagelnetz oder dergleichen fixiert ist, über den aus beispielsweise Kirschbäumen bestehenden Pflanzenreihen satteldachförmig angebracht. Gerade diese Regenschutzsysteme sind insbesondere empfindlich auf Zugbelastungen, die beispielsweise bei der Montage bzw. Demontage auftreten können. Aus diesem Grund ist hierbei vergleichsweise viel Handarbeit notwendig. Bei relativ großflächigen, zu schützenden Sonderkulturen führt dies selbst bei einem Einsatz vieler Personen zu einem hohen Zeitaufwand.

### Aufgabe und Vorteile der Erfindung

Aufgabe der Erfindung ist es demgegenüber, ein Arbeitsgerät für den Pflanzenbau vorzuschlagen, mit dem der Aufwand zur Montage bzw. Demontage von Wetterschutzsystemen der beschriebenen Art deutlich reduziert wird.

Diese Aufgabe wird, ausgehend von einem Arbeitsgerät der einleitend genannten Art, durch die kennzeichnenden Merkmale des Anspruchs 1 gelöst.

Durch die in den Unteransprüchen genannten Maßnahmen sind vorteilhafte Ausführungen und Weiterbildungen der Erfindung möglich.

Dementsprechend zeichnet sich ein erfindungsgemäßes Arbeitsgerät für den Pflanzenbau dadurch aus, dass eine wenigstens teilweise vertikal verstellbare Montiervorrichtung zum Montieren und/oder Demontieren einer Wetterschutzhaut an bzw. von einer entlang einer Pflanzenreihe angeordneten Tragevorrichtung sowie eine Einrichtung zum Abrollen und/oder Aufrollen der Wetterschutzhaut von einem bzw. auf einen Rollenhalter vorgesehen ist.

Lediglich mit Hilfe eines erfindungsgemäßen Arbeitsgerätes kann eine vergleichsweise schnelle und wenig zugbelastende Montage der Wetterschutzhaut an einer Tragekonstruktion bzw. der Tragevorrichtung erfolgen. Hierbei wird beispielsweise eine Rolle eventuell mittels einer Trommel vom Rollenhalter gehaltert, wobei mittels der vertikal verstellbaren Montiervorrichtung das Anbringen bzw. Lösen der Wetterschutzhaut an bzw. von der im Allgemeinen über der Pflanzenreihe, z.B. mehrere Meter hoch, angeordnete Tragevorrichtung bzw. einem Spannseil durchgeführt werden kann. Aufgrund der vertikal höhenverstellbaren Montiervorrichtung weist das Arbeitsgerät insbesondere eine Montier- bzw. Demontierposition auf, bei der die Montiervorrichtung wenigstens teilweise ausgefahren ist. Dagegen ist die Montiervorrichtung in einer Ruhe- bzw. Transportposition weitestgehend eingefahren bzw. zusammengezogen.

Im Allgemeinen wird das Arbeitsgerät längs der Pflanzenreihe während der Montage bzw. Demontage der Wetterschutzhaut verfahren. Währenddessen kann mit Hilfe der Montiervorrichtung kontinuierlich und/oder in gewissen Abständen eine Fixierung der Wetterschutzhaut an der Tragevorrichtung angebracht bzw. entfernt werden.

Gemäß der Erfindung kann selbst eine relativ empfindliche Wetterschutzhaut derart montiert bzw. demontiert werden, dass diese nicht auf dem Boden zu ziehen ist, was eine Beeinträchtigung dieser weitestgehend verhindert.

Durch die vertikal verstellbare Montiervorrichtung kann unter anderem eine vorteilhafte Anpassung an unterschiedlich hoch angebrachte Tragevorrichtungen realisiert werden. Hierdurch wird eine besonders große Flexibilität des Arbeitsgerätes gemäß der Erfindung erreicht.

Vorzugsweise ist die Montiervorrichtung wenigstens teilweise horizontal verstellbar ausgebildet. Mit dieser Maßnahme wird beispielsweise erreicht, dass wenigstens ein Teil der Montiervorrichtung nicht nur in einer vorteilhaften Höhe zwischen den Pflanzenreihen, sondern auch über einer Pflanzenreihe angeordnet werden kann, ohne dass einzelne Pflanzen durch das erfindungsgemäße Arbeitsgerät beeinträchtigt bzw. verletzt werden. Dies ist insbesondere deshalb von Vorteil, da beispielsweise bei einem satteldachförmigen Wetterschutzsystem häufig die Tragevorrichtung bzw. das Tragseil oder dergleichen weitgehend mittig über den Pflanzen bzw. Bäumen angeordnet ist. Durch die zum Teil horizontal verstellbare Montiervorrichtung wird in vorteilhafter Weise ein Übergreifen der Pflanzen realisierbar.

In einer besonderen Weiterbildung der Erfindung weist die Montiervorrichtung wenigstens eine vertikal und/oder horizontal verstellbare Plattform zum Aufnehmen mindestens einer Person auf. Hierdurch wird ermöglicht, dass z.B. eine Person mittels der entsprechend verstellbaren Montiervorrichtung sich unmittelbar im Bereich der Tragevorrichtung aufhalten kann. Beispielsweise fixiert die entsprechend positionierte Person die Wetterschutzhaut an der Tragevorrichtung bzw. dem Spanndraht und/oder löst die Fixierung auf. Gemäß der Erfindung wird sowohl die Plattform als auch die den Rollenhalter bzw. die Wetterschutzhaut umfassende Einrichtung zum Abrollen und/oder Aufrollen der Wetterschutzhaut im Allgemeinen zusammen längs der Pflanzenreihe verfahren, so dass die auf der Plattform sich befindende Person die Wetterschutzhaut in vorteilhafter Weise fixieren bzw. lösen kann, wobei die Schutzhaut nahezu automatisch ab- bzw. aufgerollt wird.

Vorteilhafterweise weist die Einrichtung wenigstens eine Schwenkachse zum Schwenken des Rollenhalters auf. Mit Hilfe dieser Maßnahme kann eine Auslenkung bzw. ein Verschwenken des Rollenhalters in der Weise erfolgen, dass die aufgerollte Wetterschutzhaut schräg zur Fahrrichtung und/oder schräg in Bezug zur Pflanzenreihe bzw. zur vertikalen Richtung auslenkbar ist. Insbesondere weist die Einrichtung wenigstens zwei im Wesentlichen senkrecht zueinander ausgerichtete Schwenkachsen zum Verschwenken des Rollenhalters auf.

Bei einem entsprechend ausgelenkten Rollenhalter wird in vorteilhafter Weise die Wetterschutzhaut von diesem abgerollt bzw. aufgerollt, wobei ungleichmäßige Zugspannungen der Wetterschutzhaut weitestgehend vermieden werden.

Vorzugsweise ist der Rollenhalter in Ruhe bzw. Transportposition nahezu vertikal angeordnet. Darüber hinaus wird mittels einem schwenkbaren Rollenhalter beispielsweise ein in einer Betriebsphase nahezu horizontal ausgerichteter Rollenhalter realisierbar, wodurch beispielsweise das Aufnehmen und/oder Entfernen der Wetterschutzhaut bzw. einer entsprechenden Trommel entscheidend vereinfacht wird.

Weiterhin kann in vorteilhafter Weise ein nahezu horizontales Abrollen und/oder Aufrollen der Wetterschutzhaut realisiert werden. Beispielsweise können Himbeeren, Erdbeeren, Spargel oder dergleichen in dieser Position des Rollenhalters vorteilhaft überdeckt werden.

Vorzugsweise umfasst die Einrichtung wenigstens eine Hubvorrichtung zum Verfahren des Rollenhalters. Das heißt im Allgemeinen, dass die Hubvorrichtung derart ausgebildet ist, dass mindestens der Rollenhalter sich relativ zum restlichen Arbeitsgerät bewegt bzw. sich entsprechend verstellen lässt. Beispielsweise wird dies mittels einer Zylinder-, Teleskop- und/oder Hydraulikvorrichtung bzw. einem Elektro- bzw. Hydraulikmotor realisiert. Mit Hilfe dieser Maßnahme wird nahezu unabhängig von der Montiervorrichtung ein horizontal verstellbarer und/oder vertikal verstellbarer Rollenhalter realisierbar. Dies ermöglicht eine weitere vorteilhafte Anpassung an unterschiedlich große Pflanzen bzw. deren Schutzsysteme, was die Flexibilität und die Einsatzmöglichkeiten eines erfindungsgemäßen Arbeitsgerätes wesentlich erweitert.

Vorteilhafterweise weist der Rollenhalter eine verstellbare Breite zum Anpassen an unterschiedliche Rollen bzw. Trommeln auf. Mit Hilfe dieser Maßnahme wird die Einsatzmöglichkeit bzw. Flexibilität des erfindungsgemäßen Arbeitsgerätes darüber hinaus erweitert.

In einer vorteilhaften Ausführungsform der Erfindung ist wenigstens ein Tragarm insbesondere zum Verfahren der Wetterschutzhaut von der Einrichtung zur Montiervorrichtung bzw. in umgekehrter Richtung vorgesehen. Dies verbessert vor allem in einer Startphase der Montage bzw. Demontage das Abrollen und/oder Aufrollen bzw. Fixieren der Wetterschutzhaut an der Tragevorrichtung. Beispielsweise ist der Tragarm als separat verstellbare Einheit, insbesondere horizontal und/oder vertikal verfahrbare Trageinheit, ausgebildet. Gegebenenfalls ist der Tragarm als Kran oder dergleichen ausgebildet.

In einer besonderen Weiterbildung der Erfindung ist wenigstens eine Fixiereinheit zum Fixieren der Wetterschutzhaut an der Tragevorrichtung vorgesehen. Mit Hilfe einer entsprechenden Fixiereinheit kann eine weitgehend maschinelle Fixierung verwirklicht werden. Gegebenenfalls unterstützt bzw. steuert die sich auf der Plattform befindende Person die maschinelle bzw. halb-, automatische Fixierung.

Vorzugsweise weist die Fixiereinheit wenigstens eine Sensorsteuerung zum automatisierten Fixieren der Wetterschutzhaut an der Tragevorrichtung auf. Hiermit wird eine weitestgehende Automatisierung des Montierens bzw. Demontierens der Wetterschutzhaut realisierbar.

Es ist denkbar, dass die Montiervorrichtung eine Nachführeinheit zum nahezu automatischen, weitgehend parallelen Nachführen eines Teils der Montiervorrichtung, insbesondere der Plattform bzw. der Fixiereinheit, entlang der Tragevorrichtung aufweist. Vorzugsweise wird die Position der Tragevorrichtung bzw. des entsprechenden, nachgeführten Teils der Montiervorrichtung mittels vorteilhafter Sensoren detektiert. In vorteilhafter Weise wird die Nachführung mittels einer elektronischen Steuereinheit unterstützt.

Vorzugsweise ist wenigstens eine Niveaureguliereinheit zum Regulieren des Niveaus der Plattform und/oder der Fixiereinheit vorgesehen. Mit dieser Maßnahme wird beispielsweise das Niveau der Plattform und/oder der Fixiereinheit unabhängig von Bodenunebenheiten der zu bearbeitenden Fläche regulierbar. Dies verbessert in vorteilhafter Weise die Montage bzw. Demontage der Wetterschutzhaut.

In vorteilhafter Weise ist eine Kupplungsvorrichtung zum Ankuppeln der den Rollenhalter umfassenden Einrichtung an die Montiervorrichtung vorgesehen. Mit Hilfe dieser Maßnahme wird ein vergleichsweise einfaches bzw. schnelles Verbinden bzw. Lösen der beiden Einheiten untereinander umsetzbar. Dies gewährleistet unter anderem in einfacher Weise eine jeweils separate Verwendung der Montiervorrichtung bzw. der den Rollenhalter umfassenden Einrichtung. Hierdurch wird eine separate Verwendung der Montiervorrichtung, beispielsweise als relativ einfache Hebebühne oder dergleichen, oder die Verwendung der den Rollenhalter umfassenden Einrichtung als Abroll- bzw. Aufrolleinrichtung für sonstige, rollbare Elemente wie Vliese, Netze oder dergleichen realisierbar.

In einer besonderen Weiterbildung der Erfindung weist das Arbeitsgerät eine Kupplungseinheit zum Ankuppeln an eine Zugmaschine auf, insbesondere Traktor bzw. Schlepper oder dergleichen. Beispielsweise ist das Arbeitsgerät als an die Zugmaschine ankuppelbarer Wagen mit wenigstens zwei bzw. vier Rädern ausgebildet.

Alternativ oder in Kombination hierzu kann die Kupplungseinheit als sogenannte Drei-Punkt-Kupplung, wie sie in der Landwirtschaft gängig ist, ausgebildet werden. Mit dieser Maßnahme wird ermöglicht, dass das Arbeitsgerät insbesondere in einer Transportphase bei der Fahrt zu bzw. von der zu bearbeitenden Fläche angehoben werden kann, so dass gegebenenfalls eine vergleichsweise hohe Geschwindigkeit mit der Zugmaschine realisiert wird. Möglicherweise umfasst die Kupplungseinheit in vorteilhafter Weise eine allgemein gängige Zapfwelle zum Antreiben unterschiedlichster Komponenten des Arbeitsgerätes.

Darüber hinaus kann durch das Ankuppeln des Arbeitsgerätes an eine Zugmaschine mit Hilfe der Drei-Punkt-Kupplung bereits eine gewisse vertikale Verstellung der Montiervorrichtung realisiert werden. Dementsprechend kann eine Hebevorrichtung der Montiervorrichtung entsprechend kleiner dimensioniert werden. Eine entsprechende Hebevorrichtung ist beispielsweise als Hebekran, Schwenkhubtisch, Druckzylindereinheit, mit handelsüblichen Gabelstapler vergleichbaren Hebeeinheiten oder dergleichen ausführbar.

In einer vorteilhaften Variante der Erfindung umfasst das Arbeitsgerät eine Antriebseinheit zum Eigenantrieb. Hierdurch ist in vorteilhafter Weise ein selbstfahrendes Arbeitsgerät zu verwirklichen.

Vorzugsweise ist eine Hydraulikeinheit, insbesondere zum Verschwenken der den Rollenhalter umfassenden Einrichtung, Verstellen der Montiervorrichtung bzw. Plattform, Betreiben der Fixiereinheit, Verstellen der Breite des Rollenhalters, Betätigen der Hubvorrichtung der Einrichtung, Betreiben eines Antriebsmotors bzw. Bremse des Rollenhalters zum aktiven Abrollen bzw. Aufrollen und/oder Bremsen der Wetterschutzhaut, Betätigen des Tragarms oder dergleichen vorgesehen. Entsprechende Hydraulikeinheiten sind im Pflanzenbau, in der Landwirtschaft bzw. im Sonderkulturanbau vielfach gebräuchlich, so dass auf bereits vorhandene Standardkomponenten zurückgegriffen werden kann. Dies ermöglicht eine besonders wirtschaftlich günstige Ausführungsform der Erfindung.

Vorteilhafterweise umfasst die Kupplungseinheit wenigstens eine Hydraulikkupplung, so dass das Arbeitsgerät nicht notwendigerweise eine separate Hydraulikeinheit umfassen muss, sondern dass für die entsprechenden Anwendungen vorzugsweise auf die Hydraulikeinheit des Zugfahrzeuges zurückgegriffen werden kann.

In einer besonderen Weiterbildung der Erfindung sind Standsicherungsmittel zum Sichern der Standfestigkeit des Arbeitsgerätes vorgesehen. Grundsätzlich weist das Arbeitsgerät einen vergleichsweise niederen Schwerpunkt auf. Insbesondere durch das vertikale bzw. horizontale Verstellen eines Teils der Montiervorrichtung bzw. durch ein Verschwenken des die Wetterschutzhaut umfassenden Rollenhalters wird im Allgemeinen die Position des resultierenden Schwerpunkts des Arbeitsgerätes derart verändert, dass die Gefahr eines Verkippens bestehen könnte. Mit Hilfe der vorteilhaften Standsicherungsmittel wird diese Gefahr weitgehend verringert bzw. beseitigt.

Vorteilhafterweise umfassen die Standsicherungsmittel wenigstens ein Gegengewicht. Hierdurch wird die Standfestigkeit des Arbeitsgerätes selbst bei ausgefahrener Montiervorrichtung bzw. ausgeschwenkter Rolleneinrichtung sicher gewährleistet.

Vorzugsweise weisen die Standsicherungsmittel wenigstens einen aus- bzw. einfahrbaren und/oder -schwenkbaren Ausleger auf. Beispielsweise kann am Ausleger das Gegengewicht angebracht werden.

Alternativ oder in Kombination hierzu kann der Ausleger derart ausgebildet werden, dass dieser sich auf der zu bearbeitenden Fläche abstützt. Vorzugsweise weist der Ausleger wenigstens ein Rad auf, so dass die mittels dem Ausleger realisierte Abstützung auf dem Boden in besonders einfacher Weise auch beim Verfahren des Arbeitsgerätes verwirklicht wird. Gegebenenfalls ist ein Laufrad des erfindungsgemäßen Arbeitsgerätes an einem verstellbaren Ausleger angeordnet. Das kann insbesondere dazu führen, dass der Abstand zweier Laufräder veränderbar ist bzw. vergrößert werden kann. Häufig weist ein Laufrad eine relativ große Breite auf.

Vorzugsweise besteht das Gegengewicht im Wesentlichen aus Metall, Beton und/oder einer Flüssigkeit, insbesondere Wasser. Entsprechende Materialien sind vergleichsweise wirtschaftlich günstig und weisen eine relativ hohe Dichte auf.

In einer besonderen Variante der Erfindung ist das Gegengewicht als ein wenigstens teilweise Wasser umfassendes Rad bzw. Laufrad oder dergleichen ausgebildet. Hierdurch wird in besonders einfacher Weise der Schwerpunkt relativ weit nach unten verlegt, wodurch die Standfestigkeit vorteilhaft verbessert wird.

Grundsätzlich kann eine elektrische bzw. elektronische Steuerung bzw. Überwachung des Arbeitsgerätes vorgesehen werden, die wenigstens teilweise insbesondere auf der Plattform und/oder an der Zugmaschine angeordnet ist. Hierdurch kann die sich dort befindende Person bzw. Personen in vorteilhafter Weise die Montage bzw. Demontage der Wetterschutzhaut weitestgehend steuern bzw. überwachen.

Generell kann das Abrollen bzw. Aufrollen der Wetterschutzhaut weitgehend sensorisch und/oder motorisch überwacht werden, so dass ein nahezu gleichmäßiges Montieren bzw. Demontieren dieser realisierbar ist.

Mit einem Arbeitsgerät gemäß der Erfindung kann der Arbeitsaufwand zum Aufbringen bzw. Abnehmen der Wetterschutzhaut auf ca. 50 % verringert werden, dies ist vor allem bei relativ großflächigen Anwendungen von Vorteil.

### Ausführungsbeispiel

Ein Ausführungsbeispiel der Erfindung ist in der Zeichnung dargestellt und wird anhand der Figuren nachfolgend näher erläutert.

Im Einzelnen zeigen:
- Fig. 1: eine schematische Darstellung eines erfindungsgemäßen Arbeitsgerätes während einer Montage- bzw. Demontagephase,
- Fig. 2: eine schematische Darstellung der Seitenansicht des erfindungsgemäßen Arbeitsgerätes in Arbeits- sowie Ruheposition und
- Fig. 3: eine schematische Darstellung des erfindungsgemäßen Arbeitsgerätes zwischen Pflanzenreihen.

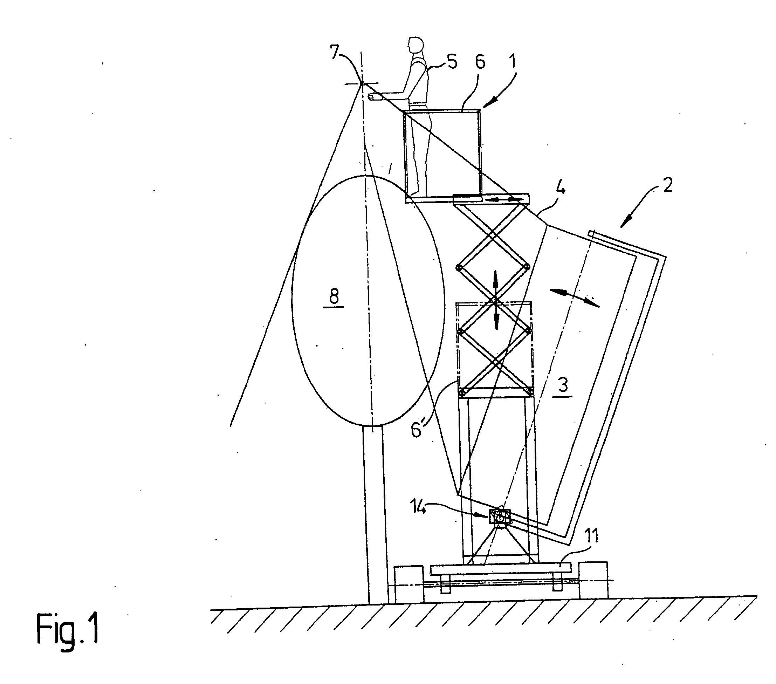

In Fig. 1 ist schematisch ein Arbeitsgerät gemäß der Erfindung mit einer horizontal und vertikal verstellbaren Hebebühne 1 und einer verschwenkbaren Halteeinheit 2 dargestellt.

Die Halteeinheit 2 ist zur Aufnahme einer Trommel 3 ausgebildet, auf der eine Schutzhaut 4 aufgewickelt ist. Die Schutzhaut 4 besteht beispielsweise in nicht näher dargestellter Weise aus einem Tragnetz, auf dem lamellenartig fixierte weitgehend wasserundurchlässige Folienstreifen oder dergleichen angeordnet sind. Die Folienstreifen sind derart am Netz fixiert, dass sich diese in den Wind stellen können. Zum Beispiel ist die Schutzhaut 4 gemäß dem Gebrauchsmuster DE 201 21 233 U1 ausgebildet.

Auf einer Kanzel bzw. Plattform 6 der Hebebühne 1 befindet sich eine Person 5. Die Person 5 fixiert bzw. löst die Schutzhaut 4 von einem Tragseil 7. Das Tragseil 7 ist nahezu mittig über einem Baum 8, insbesondere Kirschbaum, angeordnet und verläuft in nicht näher dargestellter Weise längs einer Pflanzenreihe, die aus hintereinander angeordneten Bäumen 8 gebildet wird.

Gemäß Fig. 1 wird während dem Montage- bzw. Demontagevorgang der Wetterschutzhaut 4 die Halteeinheit 2 seitlich gemäß einem dargestellten Doppelpfeil verschwenkt.

Darüber hinaus ist der Figur 1 zu entnehmen, dass die Halteeinheit 2 bezüglich der vertikalen Richtung bzw. Ruheposition der Halteeinheit 2, verschwenkt ist. Mit Hilfe einer entsprechend positionierten Halteeinheit 2 kann ein vorteilhaftes Abrollen bzw. Aufrollen der Schutzhaut 4 auf die Trommel 3 ohne relativ große Spannungen stattfinden.

In Fig. 1 ist nicht näher dargestellt, dass auf der Plattform 6 ein Steuerpult oder dergleichen zum Steuern bzw. Überwachen des Montage- bzw. Demontagevorgangs angeordnet ist.

Alternativ oder in Kombination zur dargestellten Variante ist auch gemäß der Erfindung eine weitgehend automatische Fixierung der Schutzhaut 4 am Tragseil 7 bzw. eine entsprechende Demontage denkbar.

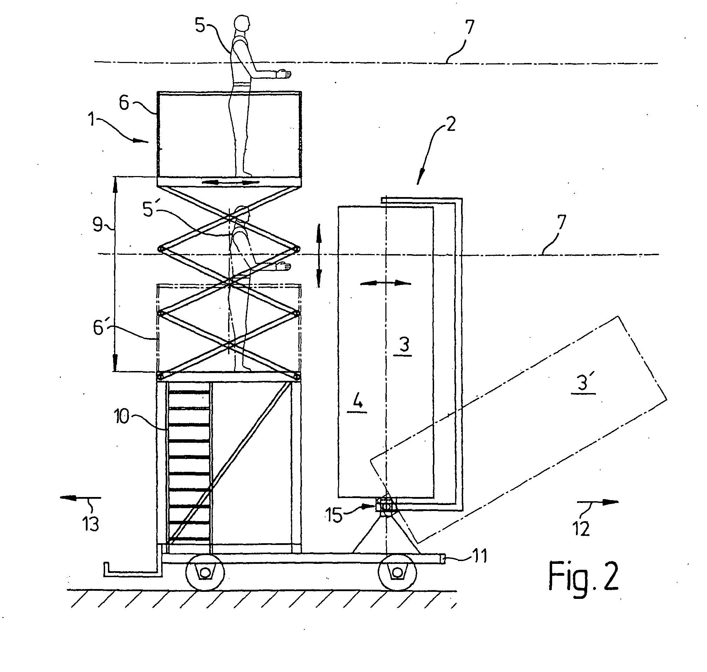

In Fig. 2 ist das Arbeitsgerät gemäß der Erfindung in Seitenansicht dargestellt. Hierbei wird die seitliche Anordnung der Hebebühne 1 in Bezug zur Halteeinheit 2 deutlich. Darüber hinaus wird das Verfahren des Arbeitsgerätes während dem Montage- bzw. Demontagevorgang längs der Tragseile 7 deutlich (vgl. Pfeile 12 bzw. 13).

Aus Gründen der Übersichtlichkeit ist eine separate Zugmaschine bzw. Traktor in den Figuren nicht näher dargestellt. In Abhängigkeit des Montage- bzw. Demontagevorganges wäre die Zugmaschine einerseits linksseitig, andererseits rechtsseitig mit dem Arbeitsgerät gemäß der Erfindung in vorteilhafter Weise zu koppeln.

Alternativ könnte in nicht näher dargestellter Weise das Arbeitsgerät gemäß der Erfindung als selbstfahrende Einheit mit einem Antriebsmotor bzw. Fahrerkabine oder dergleichen verwirklicht werden.

Das Verstellen der Halteeinheit 2 bzw. der Hebebühne 1 kann beispielsweise mittels einer Hydraulikvorrichtung, beispielsweise der Zugmaschine, verwirklicht werden. Alternativ hierzu können auch andere Verstellantriebe, insbesondere elektrische, Spindel-Antriebe oder dergleichen, verwendet werden.

In Fig. 2 ist zudem eine Hubhöhe 9 dargestellt, die beispielsweise ca. 2 m betragen kann. Das obere Seil 7 befindet sich beispielsweise in ca. 5 bis 6 Metern Höhe, so dass das Arbeitsgerät gemäß den Figuren beispielsweise eine Ruheposition aufweist, bei der die Plattform 6' bereits einige Meter über dem Boden angeordnet ist. Diese Transport- bzw. Ruhepositionen der Hebebühne 1 wird von der Person 5, 5' mittels einer Leiter 10 überbrückt. Die Ruheposition der Hebebühne 1 ist in Fig. 2 und 1 gestrichelt dargestellt.

Ein Ausschwenken der Trommel 3' in Richtung des Seils 7 ist in Fig. 2 gestrichelt dargestellt.

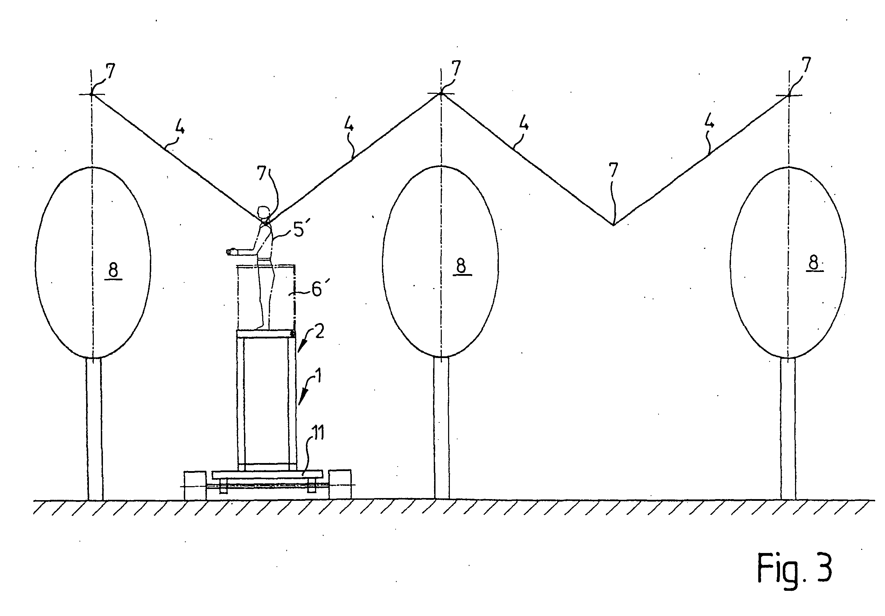

Beispielsweise kann gemäß Figur 3 die Schutzhaut 4 an einem unteren Seil 7 befestigt werden. Gegebenenfalls befindet sich die Hebebühne 1 in Ruheposition bzw. in eingefahrener Position, so dass die Person 5' in vorteilhafter Weise die Fixierung am unteren Seil 7 anbringen kann. Möglicherweise befinden sich zwei Personen 5, 5' bzw. zwei nicht näher dargestellte Fixiereinheiten auf dem Arbeitsgerät gemäß der Erfindung. Hierdurch kann beispielsweise in einem Arbeitsgang die Schutzhaut 4 sowohl am oberen 7 als auch am unteren Seil 7 fixiert werden. Gegebenenfalls sind hierfür zwei unterschiedliche Plattformen 6, 6' vorgesehen, wobei insbesondere in dargestellter Weise die Plattform 6 vertikal verstellbar ist. Möglicherweise ist eine zweite Plattform 6' fest am Arbeitsgerät fixiert.

In Fig. 3 ist in Frontdarstellung das Arbeitsgerät gemäß der Erfindung zwischen zwei Baumreihen 8 dargestellt. Hierbei befindet sich die Person 5' in eingefahrener Position der Hebebühne 1, so dass diese die Schutzhaut 4 in vorteilhafter Weise am unteren Seil 7 fixieren bzw. lösen kann.

Insbesondere in Fig. 1 und 3 wird der relativ niedrige Schwerpunkt des Arbeitsgerätes gemäß der Erfindung verdeutlicht. Hierbei weist das Arbeitsgerät eine Rahmenkonstruktion 11 mit relativ tiefem Schwerpunkt auf. Auf der Rahmenkonstruktion 11 ist die Hebebühne 1 sowie die Halteeinheit 2 befestigt.

Durch die Zeichnung wird deutlich, dass die Schutzhaut 4 zum Montieren bzw. Demontieren an der Tragekonstruktion bzw. an den Tragseilen 7 nicht auf dem Boden abgelegt bzw. gezogen wird, sondern in vorteilhafter Weise durch das Verfahren des Arbeitsgerätes auf- bzw. abgerollt wird, ohne dass nachteilige Zugspannungen auf die Schutzhaut 4 einwirken.

### Bezugszeichenliste:

- 1: Hebebühne
- 2: Halteeinheit
- 3: Trommel
- 4: Schutzhaut
- 5: Person
- 6: Plattform
- 7: Tragseil
- 8: Baum
- 9: Hubhöhe
- 10: Leiter
- 11: Rahmen
- 12: Fahrtrichtung
- 13: Fahrtrichtung
- 14: Achse
- 15: Achse

## Patentansprüche

1. Arbeitsgerät für den Pflanzenbau, **dadurch gekennzeichnet, dass** eine wenigstens teilweise vertikal verstellbare Montiervorrichtung (1) zum Montieren und/oder Demontieren einer Wetterschutzhaut (4) an bzw. von einer entlang einer Pflanzenreihe (8) angeordneten Tragevorrichtung (7) sowie eine Einrichtung (2) zum Abrollen und/oder Aufrollen der Wetterschutzhaut (4) von einem bzw. auf einen Rollenhalter (2, 3) vorgesehen ist.

2. Arbeitsgerät nach Anspruch 1, **dadurch gekennzeichnet, dass** die Montiervorrichtung (1) wenigstens teilweise horizontal verstellbar ausgebildet ist.

3. Arbeitsgerät nach einem der vorgenannten Ansprüche, **dadurch gekennzeichnet, dass** die Montiervorrichtung (1) wenigstens eine vertikal und/oder horizontal verstellbare Plattform (6) zum Aufnehmen einer Person (5) aufweist.

4. Arbeitsgerät nach einem der vorgenannten Ansprüche, **dadurch gekennzeichnet, dass** die Einrichtung (2) wenigstens eine Schwenkachse (14, 15) zum Verschwenken des Rollenhalters (2, 3) aufweist.

5. Arbeitsgerät nach einem der vorgenannten Ansprüche, **dadurch gekennzeichnet, dass** die Einrichtung (2) wenigstens zwei im Wesentlichen senkrecht zueinander ausgerichtete Schwenkachsen (14, 15) zum Verschwenken des Rollenhalters (3) aufweist.

6. Arbeitsgerät nach einem der vorgenannten Ansprüche, **dadurch gekennzeichnet, dass** die Einrichtung (2) wenigstens eine Hubvorrichtung zum Verfahren des Rollenhalters (2, 3) umfasst.

7. Arbeitsgerät nach einem der vorgenannten Ansprüche, **dadurch gekennzeichnet, dass** der Rollenhalter (2, 3) eine verstellbare Breite zum Anpassen an unterschiedliche Rollen (3) aufweist.

8. Arbeitsgerät nach einem der vorgenannten Ansprüche, **dadurch gekennzeichnet, dass** wenigstens ein Tragarm zum Verfahren der Wetterschutzhaut (4) von der Einrichtung (2) zur Montiervorrichtung (1) vorgesehen ist.

9. Arbeitsgerät nach einem der vorgenannten Ansprüche, **dadurch gekennzeichnet, dass** wenigstens eine Fixiereinheit zum Fixieren der Wetterschutzhaut (4) an der Tragevorrichtung (7) vorgesehen ist.

10. Arbeitsgerät nach einem der vorgenannten Ansprüche, **dadurch gekennzeichnet, dass** die Fixiereinheit wenigstens eine Sensorsteuerung zum automatisierten Fixieren der Wetterschutzhaut (4) an der Tragevorrichtung (7) aufweist.

11. Arbeitsgerät nach einem der vorgenannten Ansprüche, **dadurch gekennzeichnet, dass** wenigstens eine Niveaureguliereinheit zum Regulieren des Niveaus der Plattform (6) vorgesehen ist.

12. Arbeitsgerät nach einem der vorgenannten Ansprüche, **dadurch gekennzeichnet, dass** eine Kupplungsvorrichtung zum Ankuppeln der den Rollenhalter (3) umfassenden Einrichtung (2) an die Montiervorrichtung (1) vorgesehen ist.

13. Arbeitsgerät nach einem der vorgenannten Ansprüche, **dadurch gekennzeichnet, dass** das Arbeitsgerät eine Kupplungseinheit zum Ankuppeln an eine Zugmaschine aufweist.

14. Arbeitsgerät nach einem der vorgenannten Ansprüche, **dadurch gekennzeichnet, dass** das Arbeitsgerät eine Antriebseinheit zum Eigenantrieb umfasst.

15. Arbeitsgerät nach einem der vorgenannten Ansprüche, **dadurch gekennzeichnet, dass** eine Hydraulikeinheit vorgesehen ist.

16. Arbeitsgerät nach einem der vorgenannten Ansprüche, **dadurch gekennzeichnet, dass** die Kupplungseinheit wenigstens eine Hydraulikkupplung umfasst.

17. Arbeitsgerät nach einem der vorgenannten Ansprüche, **dadurch gekennzeichnet, dass** Standsicherungsmittel zum Sichern der Standfestigkeit des Arbeitsgerätes vorgesehen sind.

18. Arbeitsgerät nach einem der vorgenannten Ansprüche, **dadurch gekennzeichnet, dass** die Standsicherungsmittel wenigstens ein Gegengewicht umfassen.

19. Arbeitsgerät nach einem der vorgenannten Ansprüche, **dadurch gekennzeichnet, dass** die Standsicherungsmittel wenigstens einen Ausleger aufweisen.

20. Arbeitsgerät nach einem der vorgenannten Ansprüche, **dadurch gekennzeichnet, dass** der Ausleger wenigstens ein Rad umfasst.

21. Arbeitsgerät nach einem der vorgenannten Ansprüche, **dadurch gekennzeichnet, dass** das Gegengewicht im Wesentlichen aus Metall, Beton und/oder einer Flüssigkeit besteht.

22. Arbeitsgerät nach einem der vorgenannten Ansprüche, **dadurch gekennzeichnet, dass** das Gegengewicht als ein wenigstens teilweise Wasser umfassendes Rad ausgebildet ist.
